Europäisches Patentamt

European Patent Office

Office européen des brevets

(19)

(11) Publication number : **0 565 147 A1**

(12) **EUROPEAN PATENT APPLICATION**

(21) Application number : **93200552.3**

(22) Date of filing : **26.02.93**

(51) Int. CI.⁵ : **B60R 25/10**

(30) Priority : **10.04.92 IT RE920026**

(43) Date of publication of application :
**13.10.93 Bulletin 93/41**

(84) Designated Contracting States :
**AT BE CH DE DK ES FR GB GR IE IT LI LU MC
NL PT SE**

(71) Applicant : **MED di REGGIANI MEDARDO**
**Via Raffaello, 33/A**
**I-42100 Reggio Emilia (IT)**

(72) Inventor : **Reggiani, Medardo, c/o MED di
Reggiani Medardo
Via Raffaello, 33/A
I-42100 Reggio Emilia (IT)**

(74) Representative : **Corradini, Corrado et al
Studio Ing. C. CORRADINI & C. S.r.l. 4, Via
Dante Alighieri
I-42100 Reggio Emilia (IT)**

(54) Improved alarm system for motor vehicles.

(57)    In an alarm system for closed environments, particularly for motor vehicles, of the type based on comparing signals emitted and signals received within a closed environment, and on a danger signal emitted on the basis of a change in a parameter, such as the frequency, of the signals emitted and the signals received, the emitted signals consist of pulse trains and the received signals consist of the reflected echoes of the emitted signals, the danger signals being based on only the changes in the received echo envelopes with time following the multiple reflections undergone by the emitted signal.

Fig. 3

Known antitheft alarm systems for use on motor vehicles substantially comprise means for emitting signals in the form of high frequency waves either continuously or at predetermined intervals, and means for receiving said waves after they have been reflected from the surfaces of the passenger compartment.

The frequency of the signals emitted and received does not change if the reflecting surface is stationary, whereas it varies if the reflecting surface is moving.

Differences between the frequency of the emitted signals and the frequency of the received signals therefore indicate alarm situations. such as the intrusion of a person into the passenger compartment, or even the simple opening of a door.

Alarm systems of the aforesaid type suffer however from drawbacks due to their intrinsic nature, which cannot be eliminated. The most important include continuous and excessive energy consumption which, if the system is to remain active for a considerable time, can compromise its effectiveness.

If installed on an average automobile, after a few days of continuous activation the battery discharges and makes it impossible to start the engine, the system itself becoming deactivated if the stoppage is further prolonged.

Another considerable drawback is the excessive sensitivity of the system to external disturbance factors such as temperature, vibrations and the like.

If the sensitivity threshold of the system is set at a value which ensures perfect effectiveness in the case of vehicle break-in, false alarms frequently occur due to external factors, which in addition to creating annoyance can also compromise the credibility of the system.

The object of the invention is to provide an alarm system without the aforesaid drawbacks, within the framework of a relatively simple and economical structure.

This object is attained according to the invention by a system comprising at least one transducer which emits a signal consisting of pulse trains consisting of a certain number of pulses, for example 8 pulses each, which are emitted at intervals of for example 0.5-3 seconds and are reflected by the inner walls of the automobile passenger compartment, and a second transducer which receives the reflected pulses.

The time during which the pulses are emitted is negligible (for example 1/100) compared with the time during which the echoes are collected, this accounting for the very low energy consumption of the system.

The signal formed by the reflected pulses is amplified, demodulated and filtered and then sampled by an A/D converter.

If represented as a V,t diagram it assumes for each internal configuration of the passenger compartment a certain form which is nothing other than the envelope of the echoes received as a result of the multiple reflections undergone by the emitted signal.

According to the invention, the internal situations of the automobile passenger compartment are compared with each other periodically by operating on the echo envelope samples.

Various calculation procedures can be used in operating on the difference between two successive echo samples.

If said samples are equal or substantially equal, a non-danger situation exists.

If however said samples are substantially different, an alarm situation exists.

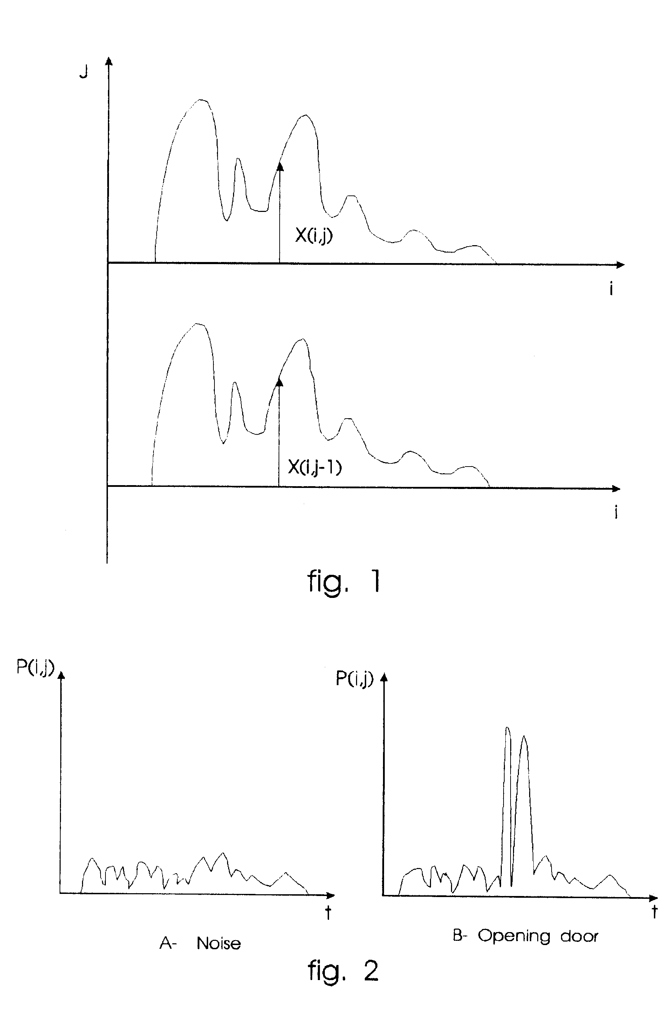

To evaluate the degree of deformity between two successive echoes, according to the invention reference can be made preferably but not exclusively to the quantities reproduced graphically in Figure 1.

If $X(i,j)$ is the $i^{th}$ sample of the $j^{th}$ echo, then the difference between two corresponding samples of two successive echoes is given by:

$$V(i,j) = X(i,j) - X(i,j-1)$$

whereas the signal power associated with the difference between two successive or consecutive echoes is given by:

$$P(i,j) = V(i,j)^2 = [X(i,j) - X(i,j-1)]^2$$

Under tranquil conditions, the power in play is theoretically zero, and in practice is negligible.

Taking as the parameter the aforedefined power $P(i,j)$, which basically represents the square of the difference between two consecutive echoes, various calculation systems or algorithms can be used to indicate alarm situations.

A first algorithm according to the invention is based on the echo disuniformity.

The diagram of Figure 2A shows the function $P(i,j)$ under tranquil conditions.

In it the function $P(i,j)$, ie the square of the difference between two consecutive echoes as heretofore defined, never exceeds a very low value, its difference from zero being due to the background disturbances existing in the passenger compartment, such as vibrations induced from the outside, temperature variations and the like.

If the internal configuration of the passenger compartment is modified, within a certain echo region, this region being further to the right of the diagram the greater is the distance of the reflecting surface concerned with the modification from the receiver, there is a substantial difference between the echo sample and the preceding echo sample.

The diagram of Figure 2B shows the corresponding variation in the square of the difference or power $P(i,j)$.

In the illustrated case the modification in the internal configuration of the passenger compartment is due for example to the opening of a door.

In this case, if the signal transmitter and the signal receiver are located in the opposite door to the one opened, the variations are produced only in the second part of the echo because of the distance between the doors.

Hence a signal formed from the ratio of the sum of the $P(i,j)$ values contained within the second part of the echo to the sum of the $P(i,j)$ values contained within the first part of the echo becomes significant, these sums being represented by the respective areas under the diagram.

In the absence of background disturbances, the sum of the $P(i,j)$ values in the first part of the echo could be equal to zero. In this case it is assumed at least equal to 1.

The value of the ratio is a function $D(j)$, which is subjected to an averaging operation after being filtered numerically to prevent the influence of anomalous peaks due to sudden disturbances.

The mean value $Df(j)$ of a certain predetermined number of filtered $D(j)$ values represents the term for comparison with a predetermined threshold value $S(j)$, to identify danger situations.

The value $S(j)$ can be a fixed value or be constructed as a multiple of a particular average of $D(j)$ values.

The threshold value $S(j)$ can be exceeded for $D(j)$ values due to disturbances which continue with time.

For example, the ratio results $D(j)$ are memorized in a buffer which can contain a discrete number of values, corresponding for example to the values expressed within one second of time, and which is updated on obtaining a new $D(j)$ value, with the simultaneous difference of the first value which had entered the buffer.

Of the $D(j)$ values contained in the buffer, suitable filters enable only those values to be counted which exceed a certain value, or weight, assigned such that the alarm condition is generated only if the values counted are numerous, hence preventing false alarm conditions.

A second algorithm according to the invention is based more simply on the power of the difference between successive echoes.

The alarm conditions provided by the two algorithms are combined with a logic (OR) operation to provide a single alarm condition.

The invention will be more apparent from the description of a preferred embodiment thereof given hereinafter by way of non-limiting example and illustrated in the figures of the accompanying drawings, in which:

Figure 1 shows graphically successive $J^{th}$ and $(J-1)^{th}$ samples of the same $i^{th}$ echo.

Figure 2A shows graphically the power of the signal associated with the difference between two successive echoes in the case of tranquillity.

Figure 2B shows the same quantity in the case of environment modification.

Figure 3 shows the block diagram of the system.

Figure 4 shows the detailed scheme of the transmitted block.

Figure 5 shows the scheme of the microcontroller.

Figure 6 is a diagram showing the timings of the control signal.

Figure 7 shows the block diagram of the receiver.

Figure 8 is a diagram showing the gains of the amplification chain.

Figure 9 shows the detailed scheme of the receiver.

Figure 10 shows the scheme of the interface device.

Figure 11 shows the logic-functional scheme of a possible calculation system.

Figure 12 shows the scheme of a further possible calculation system for the system.

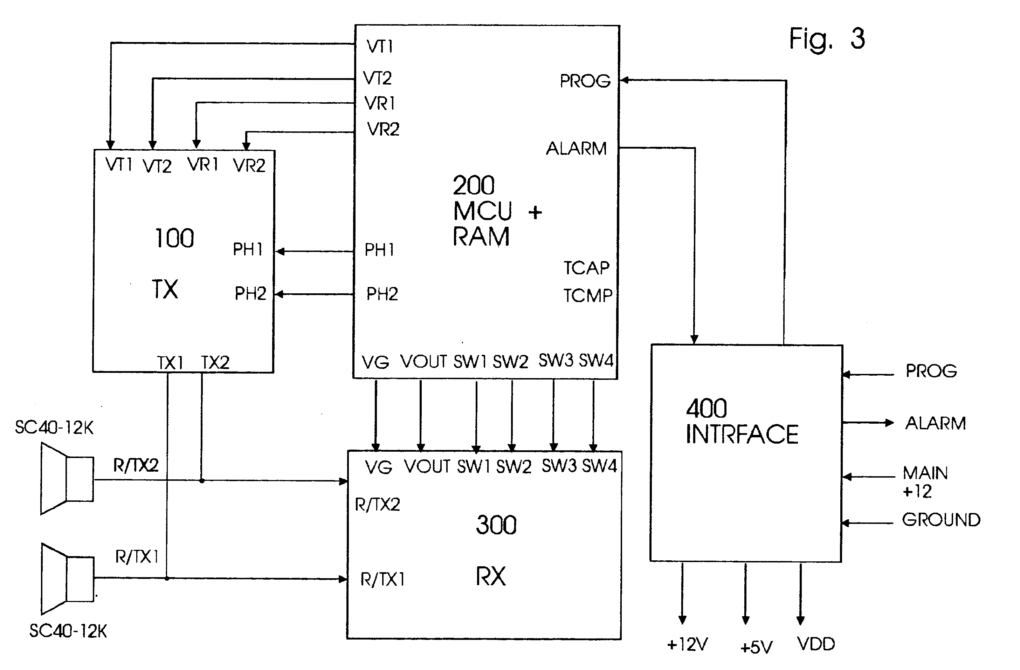

The basic blocks which characterise the overall system can be seen from Figure 3.

The heart of the system is an 8 bit microcontroller 200, the purpose of which is:

- to generate all the control signals for the other blocks of the system,
- to digitalize the echoes by means of an A/D converter,
- to check that the input signal level remains at the correct amplitude,
- to process the successive echo samples.

The microcontroller 200 comprises the necessary RAM size to allow the processing of echo samples which are successive in time.

The transmitter block 100 receives certain signals (VT1, VT2, VR1, VR2) from the control unit 200 and controls the transducers with trains of eight pulses, with an amplitude of the order of 40 volts at a frequency of 40 KHz. The pulse repetition frequency is 16 Hz.

The receiver block 300 is composed of a chain of amplification, demodulation and filtration stages. The demodulation is AM (amplitude demodulation). It should be noted that the each channel shares the reception

EP 0 565 147 A1

signal with the transmission signal, as the transducers perform the double task of transmitting and receiving. The amplification chain is of variable gain, controlled digitally by the microcontroller 200.

The provision of two channels for pulse transmission/reception (R/ANTITHEFT1 and R/ANTITHEFT2) is necessary for complete spatial cover of an automobile passenger compartment. The two channels are independent and separate, and do not disturb each other because they are active during different time intervals. Each transducer (R/ANTITHEFT1 and R/ANTITHEFT2) operates both as a pulse transmitter and then as an echo receiver. In the example, "NiCera SC40-12K" piezoelectric transducers are used.

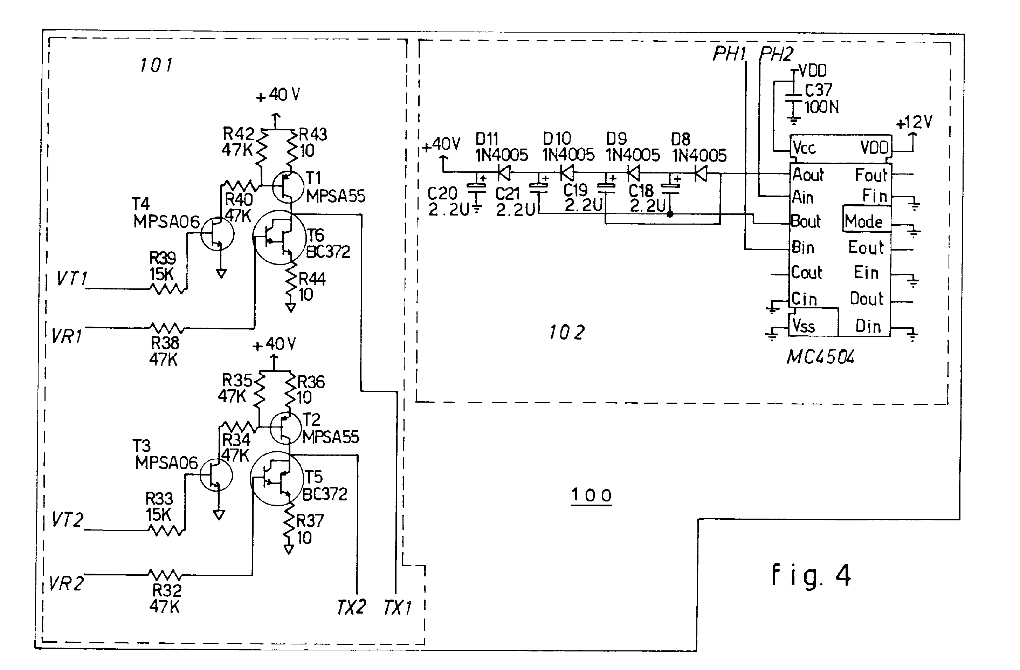

The transmitter block 100 is shown in greater detail in Figure 4, and comprises the transmitters 101 and the charge pump 102.

In the transmitters 101 the configuration of the transistors T1, T6 and T2, T5 is similar to push-pull (when T1 is on, T6 is off and vice versa).

T6 and T5 are of Darlington type to achieve better control current gain, and the control signals VR1 and VR2 originate directly from the microcontroller 200.

T3 and T4 shift the level of the control signals VT1 and VT2 (originating directly from the microcontroller), this being essential for correct control of T1 and T2.

The transmission lines ANTITHEFT1 and ANTITHEFT2 are at high impedance when all the control signals are at logic level 0, hence minimizing power consumption. Under these conditions the transmitter is isolated from the transducer and from the receiver circuit.

In addition to limiting current, the resistors R36, R37, R43 and R44 act as feedback resistors to facilitate inhibiting the transistors.

The resistors R32, R33, R34, R35, R38, R39, R40 and R42 polarize the transistors so as to provide the minimum base current required for their operation.

The purpose of the charge pump 102 is to generate within the circuit a constant voltage of about 40 V, of very low power.

A voltage higher than the feed voltage can be generated in various ways (ad hoc integrated circuits exist).

In the example the charge pump comprises two voltage duplication cells, each formed from two diodes and two capacitors. The first cell comprises D8, D9 and C18, C19, and the second cell comprises D10, D11 and C20, C21.

Two control signals of opposite phase PH1 and PH2 are generated by the microcontroller, and are in the form of two 2 KHz square waves.

A CMOS level translator (MC4504) is provided to convert the control signals from 0-5 V to 0-12 V (this enables the required number of duplication cells to be minimized).

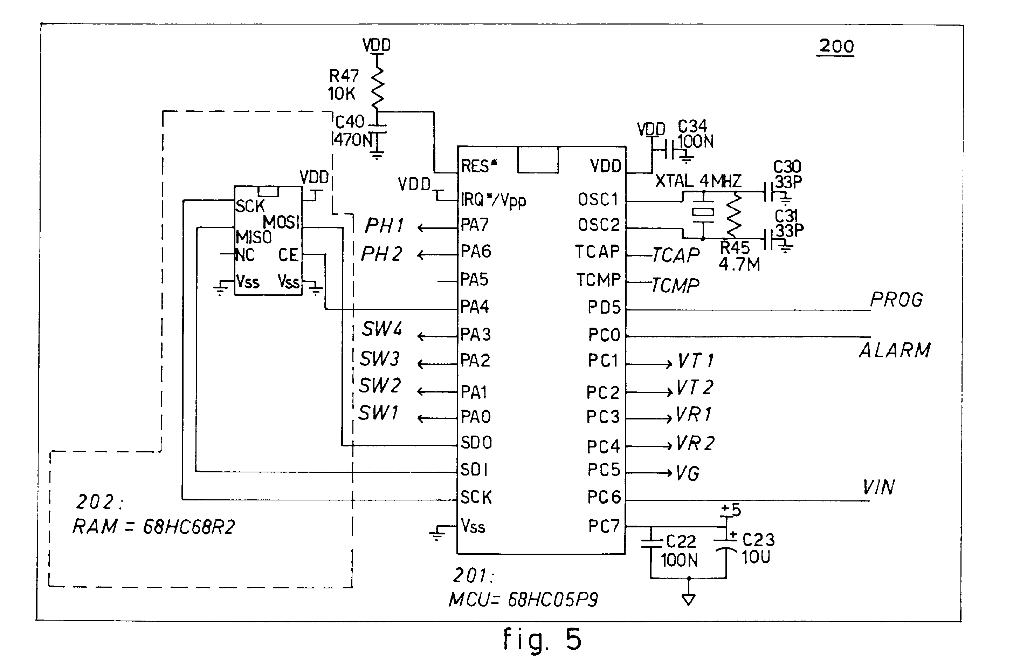

The microcontroller 200 is shown in greater detail in Figure 5, in which it is divided into the block 201 representing the microcontroller, and block 202 representing the RAM memory.

The microcontroller 201 used is the Motorola MC68HC705P9, pertaining to the 68HC05 family. This device provides all requirements in terms of the number of I/O gates, the internal A/D converter, the synchronous serial interface, the timer etc.

The microcontroller handles the following control signals:
- SW1, SW2, SW3, SW4 which control the gain of the amplifier circuits. In passing from logic level O to 1 SW1 induces the smallest variation in the gain of the amplification chain gain, and SW4 the greatest;
- VG which enables/disenables the first receiver stage so as to isolate it from the transducer during pulse transmission;
- VT1, VR1, VT2, VR2 which control the two push-pull transmission stages.

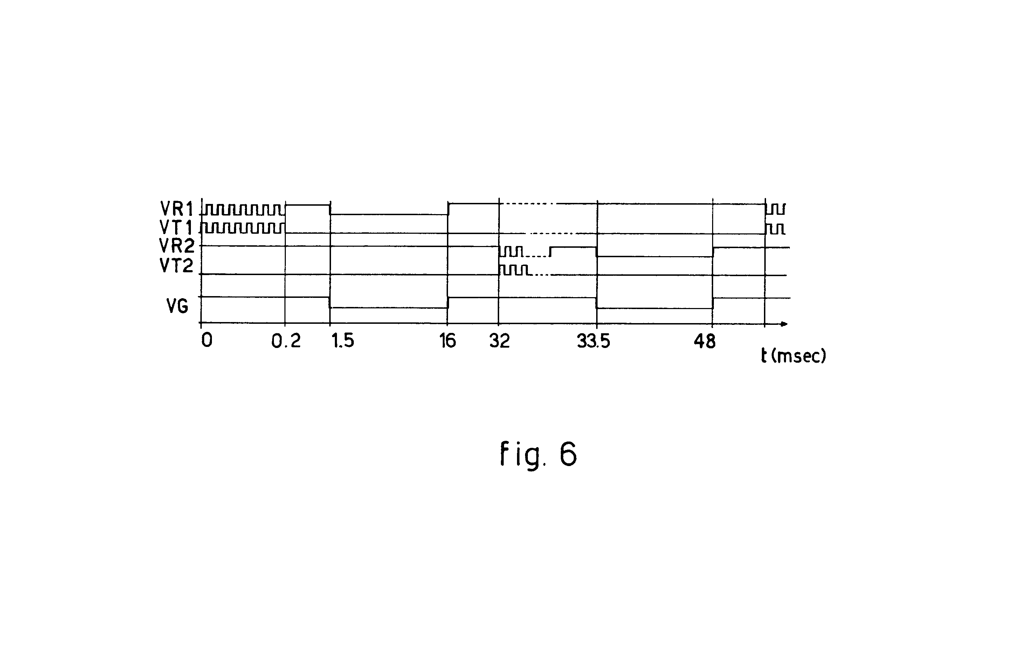

The control signal timing can be seen from the time diagram of Figure 6.

The other signals handled by the microcontroller 201 are:
- PH1, PH2, these being two 2 KHz square waves controlling the charge pump 102;
- SCK, SDI, SDO, there being the serial interface signals;
- OSC1, OSC2, being the connection for the 4 MHz crystal (XTAL);
- VIN, being the input of the microcontroller A/D converter;
- ALARM, being an output which is put to 1 when, during processing, the microcontroller notes that the alarm threshold has been exceeded;
- RESET, a low active signal for resetting the system when in the correct state. It can originate from the central alarm unit or be generated by the circuit itself when the system is powered, via the delay network R47, C40;
- PROG, which makes sophisticated interfacing possible (peripheral radar programming) with future alarm centres;
- CE, a chip enabling signal for the RAM;
- SCK, MISO, MOSI, being the three serial interface signals which refer directly to the duals present in

4

the microcontroller.

The chosen RAM memory 202 is of serial type for reasons of size, price and energy consumption. It is in the form of a HARRIS 68HC68R2 integrated circuit. Interfacing with the microcontroller is much simplified because it requires the use of only three connection lines (instead of a bus).

The RAM capacity must be such as to memorize at least two complete echo forms (256 bytes are typically sufficient for this purpose), plus all the memory required for the remaining program variables and for the processing results (estimated at at least 128 bytes).

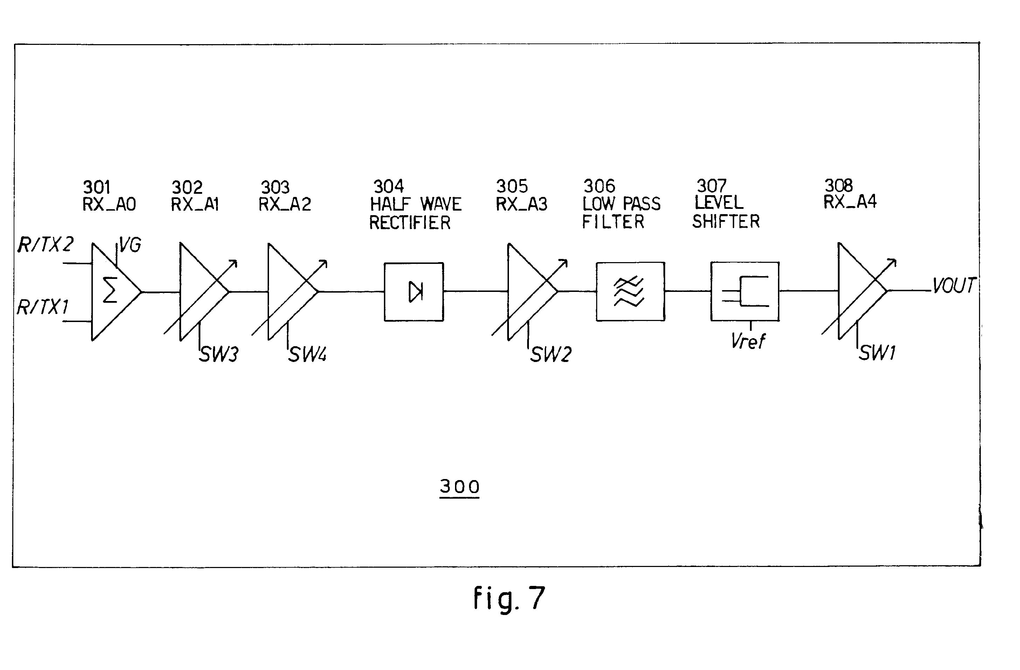

The receiver 300 can be divided into further sub-blocks, as shown in Figure 7. RX-AO (301) is the first high frequency amplification stage and has fixed gain; RX-A1 (302) and RX-A2 (303) are two further HF amplification stages (here, and hereinafter, HF means the transmission frequency of ultrasound, ie 40 KHz, whereas LF means the low frequency of the demodulated signal), and have variable gain; the HALF WAVE RECTIFIER (304) together with the LOW PASS FILTER (306) and LEVEL SHIFTER (307) perform the amplitude demodulation and restore the complete dynamics of the signal in the range 0-5 V; RX-A3 (305) and RX-A4 (308) are two low frequency amplification stages and have variable gain. In the example TLC274 (TEXAS INSTRUMENTS) operational amplifiers are used in all HF stages and the LPC660 (National) in the LF section of the circuit.

Variable amplification is essential in order to be able to adapt the system to the many operative situations in which it may operate (automobiles of different dimensions, transducers with considerable characteristics dispersion, temperature variations etc.). Gain variation occurs at predetermined instants of time, and is completely handled by the microcontroller by means of the four CMOS analog switches present in the MC4016 (MOTOROLA) integrated circuit.

In the example, the amplification chain, consisting of the blocks 302, 303, 305, 308 can have an overall gain of between about 23 dB and 63 dB, achieving a dynamic of 40 dB. The gain scale is logarithmic, so that the percentage amplification changes are constant when passing from one value to the next.

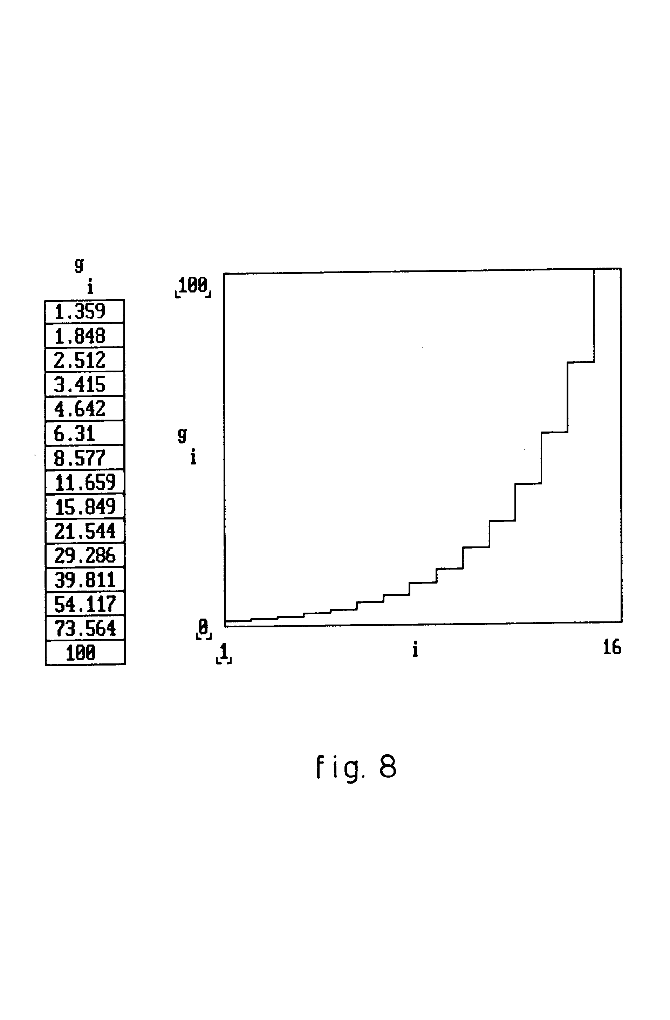

In this respect, a design has been provided in which each of the four variable gain stages can be switched to two different amplification values. In this manner 16 possible gain combinations are achieved, and can be easily handled digitally. In practice the microcontroller increments or decrements an internal 4 bit number (the binary value of which corresponds to the state of the four signals SW1...SW4) until the value of the received signal reaches the desired amplitude. The scale of the chosen 16 possible combinations is shown in Figure 8, where the $g_i$ values represent the amplification factors which can be set.

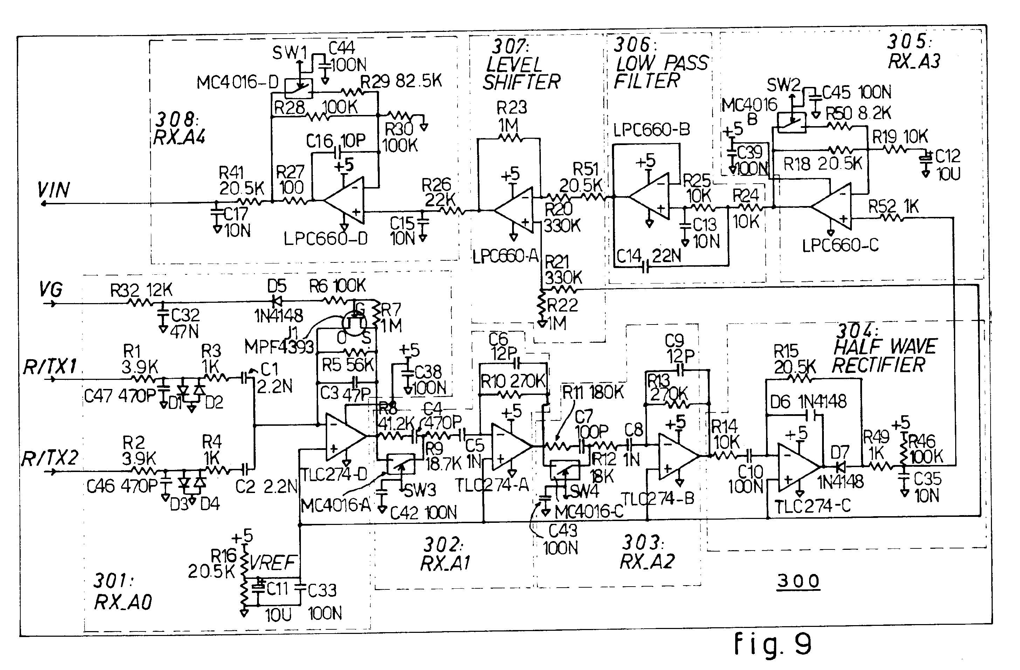

A detailed description will now be given of the constituent blocks of the receiver 300, with reference to Figure 9.

The circuit of block 301, RX-AO, is configured to amplify the sum of the (alternating) signals present at the two terminals R/ANTITHEFT1 and R/ANTITHEFT2. R1, C47, R3 and C1 form the load seen by one of the two transducers when it operates as a receiver; likewise for R2, C46, R4 and C2 with regard to the second transducer.

The purpose of the diodes D1, D2, D3 and D4 is to limit the signal excursion at the receiver input during the transmission stage.

R5, C3 complete the classic operational adder configuration; C3 limits the gain band for stability and noise rejection reasons.

The JFET transistor J1 acts as a time-controlled attenuator. During transmission it is switched to ON to provide unit feedback between the operational amplifier input and output. 1.5 ms after transmission it is switched to OFF to re-enable amplification. The FET must be switched off smoothly, this being done by the RC network formed by R32 and C32. R16, R17, C11 and C33 generate a reference voltage for correct continuous polarization of the amplifiers.

The configuration of the block 302, RX-A1, is the classic configuration of an alternately coupled inverting amplifier. The gain at the band centre can vary from R10/R9 to R10/(R9+R8), depending on whether the switch MC4016-A is open or closed.

C4, C5 and C6 limit the amplifier passband to only the desired frequencies.

The configuration of the block 303, RX-A2, is the classic configuration of an alternately coupled inverting amplifier. The gain at the band centre can vary from R13/R12 to R13/(R12+R11), depending on whether the switch MC4016-C is open or closed.

C7, C8 and C9 limit the amplifier passband to only the desired frequencies.

The block consists of a precision rectifier for the positive half-waves of the signal at 40 KHz (by means of D6 and D7 in ideal diode configuration) and a peak value detector (R49, C35).

R15 and R14 amplify the output half-waves by a factor of 2.

C10 decouples the diode D7 from continuous and R46 provides correct polarization.

The configuration of the block 305, RX-A3, is the classic configuration of an alternately coupled non-in-

5

verting amplifier. The gain at the band centre can vary from (1+R18/R19) to [1+R18//R50)/R19], depending on whether the switch MC4016-B is open or closed.

C12 decouples the diode D7 from continuous and R52 limits the effects of the input capacitance on stability.

The block 306 is a second order active low pass filter of Sallen & Key type, with unit gain in the passband.

The frequency response is of Butterworth type, ie of maximum flatness, in that R24 = R25, and C14 = 2*C13.

The cutoff frequency is deduced from known formulas, namely:

$$fc = \frac{1}{2\pi\sqrt{(R^2 x 2 x C^2)}}$$

In the example, fc is chosen as 1 KHz.

The block 307 represents a classic use of an operational amplifier subtractor configuration. The (constant) reference voltage is subtracted via the resistors R21, R22 from the signal present at the inverting terminal of the operational amplifier.

The resistors R23, R20 are equal to R21 and R22 respectively. The amplification factor, about 2.5, compensates for the insertion losses of the preceding stages.

R51 compensates for the possible information losses due to the offset.

The block 308 has the classic configuration of a continuously coupled non-inverting amplifier. The gain at the band centre can vary from (1+R28/R30) to [1+R28//R29)/R30], depending on whether the switch MC4016-D is open or closed.

R27 and C15 introduce a dominant pole into the amplifier transfer function to decouple the stage from high output capacitances.

R26 and C15 in fact form a further active low pass filtering stage, as do R41 and C17.

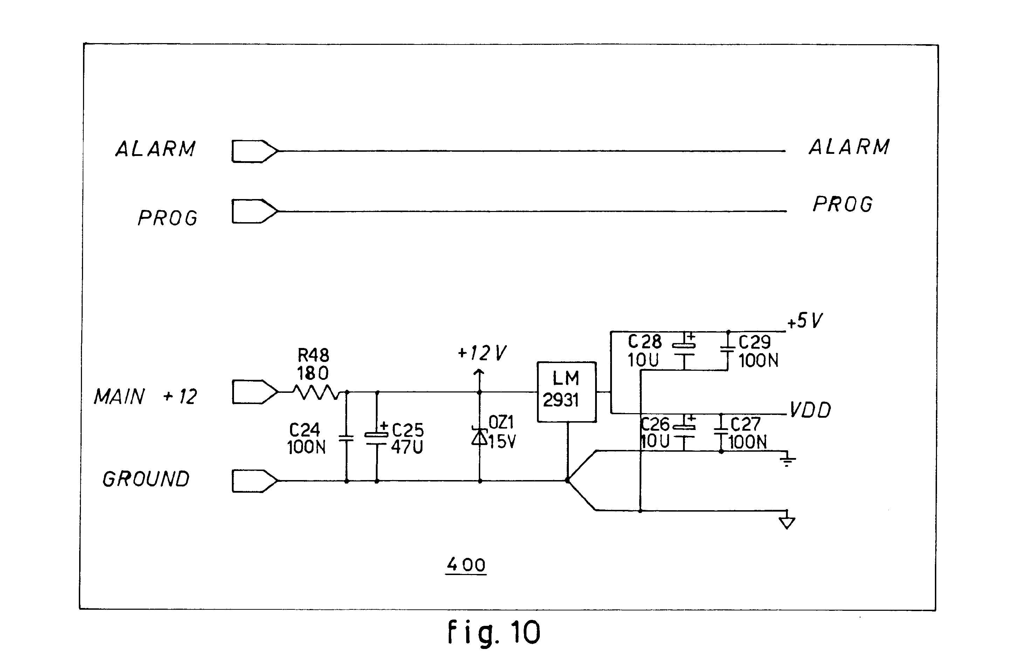

The interface with the central alarm unit is very simple, and is shown in Figure 10.

The feed voltage (MAIN +12) is provided by the central alarm unit. After being filtered by C24 and C25 it is converted into a 5V regulated voltage by the LM2931 integrated circuit (National). The zener diode DZ1 prevents the feed voltage exceeding the maximum value of 15 V for long periods. The +12 V voltage taken across the zener diode powers the charge pump 102. Upstream of the regulator the feeds for the analog and digital parts are kept separate and are filtered by C26, C27, C28 and C29.

With reference to Figure 3, the interfacing signals PROG and ALARM enter the block 200 directly.

In the aforedescribed system the signals are processed in the following manner.

The signal received from the transducer is amplified, demodulated and filtered, and is then sampled by an 8 bit A/D converter. 64 samples are used for the numerical processing, the sampling frequency being 4 kHz, the total sampling time for each echo hence being 16 ms.

Figure 1 shows a time succession of the echoes received and processed by a single channel.

Let $X(i,j)$ be the $i^{th}$ sample of the $j^{th}$ echo, where i can vary from 0 to 63.

The echoes relating to the same channel are spaced apart by 1/16 sec or a multiple of this quantity.

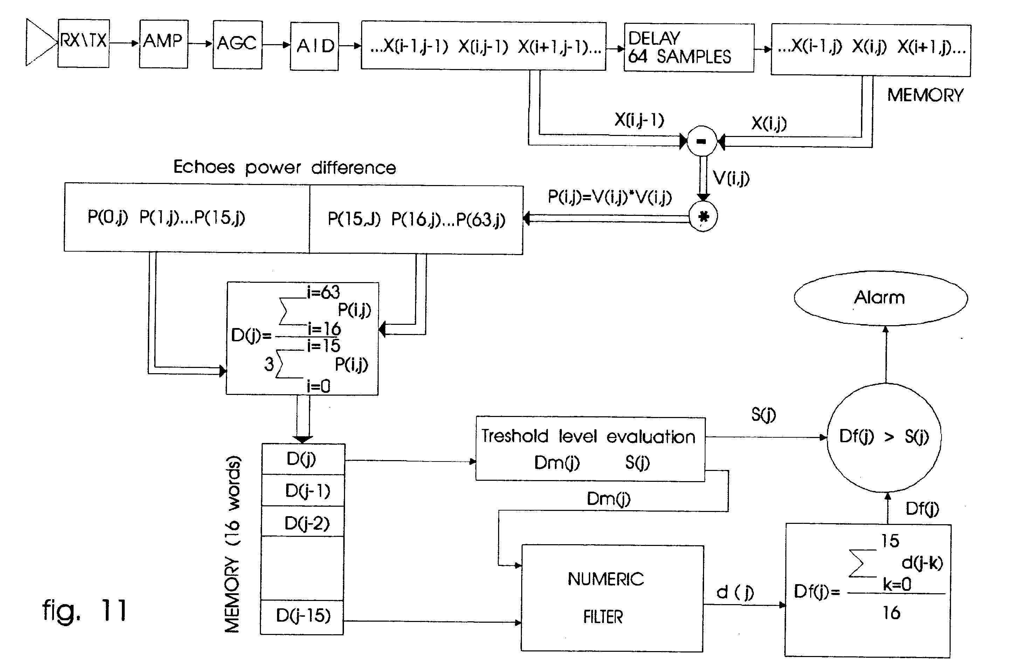

The first calculation procedure for determining alarm conditions is shown in Figure 11.

Let $V(i,j)$ be the difference between two corresponding samples of successive echoes.

$$V(i,j) = X(i,j) - X(i,j-1)$$

The square of the difference between two echo samples is given by:

$$P(i,j) = V(i,j)^2 = [X(i,j) - X(i,j-1)]^2$$

The signal $P(i,j)$ is the signal power associated with the difference between two consecutive echoes. Under tranquillity conditions, the forms of the echo envelopes are virtually identical and the power in play due to differences is negligible.

Let $D(j)$ be the ratio of the variables shown in the following expression:

$$D(j) = \frac{\sum_i P(i,j)}{3.\sum_{ii} P(ii,j)} \qquad \begin{array}{l} i = 16....63 \\ \\ ii = 0....15 \end{array}$$

The denominator of the above formula is checked, the requirement being that it is at least equal to Den0, where in this specific case Den0 = 192.

The threshold S(j) in the illustrated example is fixed and is given by the product of two constants:

$$S = S(j) = K \times Dm$$

In the case under examination, K = 8 and Dm = 3.

Before being averaged the D(j) values are filtered by the following procedure:

Let {B0-B15} be a buffer containing the 16 most recent values of the variable D(j).

Let:

Ia = number of D(j) in {B0-B15} such that $D(j) \geq Pa \times Dm$

Ib = number of D(j) in {B0-B15} such that $D(j) \geq Pb \times Dm$

Ic = number of D(j) in {B0-B15} such that $D(j) \geq Pc \times Dm$

Id = number of D(j) in {B0-B15} such that $D(j) \geq Pd \times Dm$

Ie = number of D(j) in {B0-B15} such that $D(j) \geq Pe \times Dm$

If = number of D(j) in {B0-B15} such that $D(j) \geq Pf \times Dm$

where Pa, Pb, Pc, Pd, Pe, Pf are assigned weights on which the system sensitivity depends. Let d(j) be the filtered variable. Then for each D(j) value in the buffer {B0-B15}:

d(j) = D(j) if

$Ia \geq Na$ and $Ib \geq Nb$ and $Ic \geq Nc$ or

$Id \geq Na$ and $Ie \geq Nb$ and $If \geq Nc$ or

$Ia = Ib = Ic = Id = If = 0$

d(j) = Dm(j) under all other conditions.

Na, Nb, Nc, Nd, Ne, Nf are predetermined whole-number constants. In the case under examination the following values are given:

| | | | |
|---|---|---|---|
| Pa = 3 | Na = 8 | Pd = 3 | Nd = 10 |
| Pb = 10 | Nb = 5 | Pe = 8 | Ne = 7 |
| Pc = 32 | Nc = 1 | Pf = 16 | Nf = 1 |

Finally, the variable Df(j) is defined as the mean of the filtered d(j) values, as follows:

$$Df(j) = 1/16 \, \Sigma \, d(j - k) \qquad k = 0....15$$

On the basis of the attained values of Df(j) and the current threshold value S(j), the alarm condition can be set as follows.

$$\text{Alarm D1} = \begin{cases} 1 \text{ if } Df(j) > S(j) \\ 0 \text{ otherwise} \end{cases}$$

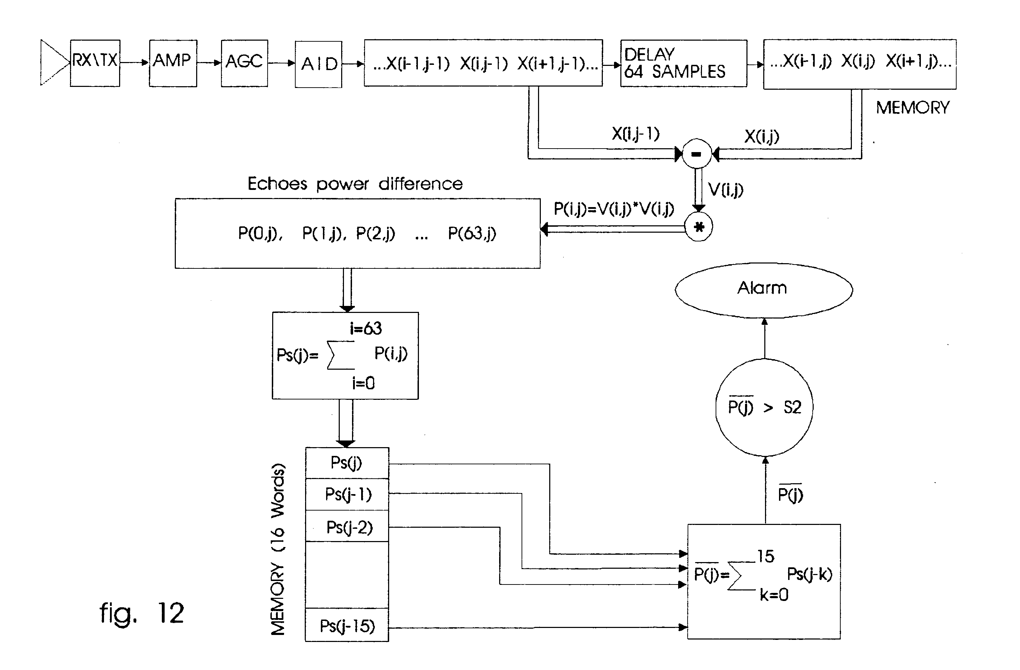

The alarm condition is also set on the basis of a second algorithm known as the power algorithm P1 (see Figure 12).

By definition:

$$V(i,j) = X(i,j) - X(i,j-1)$$

The square of the difference is given by:

$$P(i,j) = V(i,j)^2$$

The sum of the squares of the differences over the entire echo can be calculated as:

$$Ps(j) = \Sigma \, P(i,j) \qquad i = 0....63$$

Ps(j) is averaged over various echoes to attenuate possible pulse disturbances.

The mean can be taken over a time of one second, corresponding to the time for receiving 16 echoes.

$$P(j) = \Sigma_i \, Ps(k) \qquad k = 15....j$$

The alarm condition is set for:

$$
\text{Alarm P1} = \begin{cases} 1 \text{ if } P(j) > S2 \\ 0 \text{ otherwise} \end{cases}
$$

S2 represents the threshold beyond which the alarm condition is set. S2 is a whole-number constant equal to 160000.

## Claims

1. An alarm system for closed environments, particularly for motor vehicles, of the type based on comparing signals emitted and signals received within a closed environment, and on a danger signal emitted on the basis of a change in a parameter, such as the frequency, of the signals emitted and the signals received, characterised in that the emitted signals consist of pulse trains and the received signals consist of the reflected echoes of the emitted signals, the danger signals being based on the processing of the received signals.

2. An alarm system as claimed in claim 1, characterised in that the danger signals are based on only the changes in the received echo envelopes with time following the multiple reflections undergone by the emitted signal.

3. An alarm system as claimed in claim 1, characterised in that the pulse trains are emitted at intervals of at least 0.010 seconds.

4. An alarm system as claimed in claim 1, characterised in that the envelope of the received echoes is formed by sampling the reflected pulses by an A/D converter after they have been amplified, demodulated and filtered.

5. An alarm system as claimed in claims 1 and 4, characterised in that the echo envelope can be represented as a diagram which assumes a certain form for each configuration of the environment within which the emitter means and receiver means are located.

6. An alarm system as claimed in claim 1, characterised in that the changes in the received echo envelopes with time are measured by taking as parameter the square of the difference, or power, between two consecutive echoes.

7. An alarm system as claimed in claim 1, characterised in that the changes in the received echo envelopes with time are measured by taking as parameter the difference between two consecutive echoes.

8. An alarm system as claimed in claim 7, characterised in that the extent of the changes in the received echo envelopes with time is measured as the mean of a predetermined number of filtered values of the ratio between the areas of two parts of the mean square difference diagram, the mean value being compared with a predetermined threshold value.

9. An alarm system as claimed in claim 8, characterised in that the predetermined threshold value is a fixed value.

10. An alarm system as claimed in claim 8, characterised in that the predetermined threshold value is a multiple of the average of the mean values of a predetermined number of filtered values of the ratio of the areas of two parts of the mean square difference diagram.

fig. 1

A- Noise

B- Opening door

fig. 2

Fig. 3

EP 0 565 147 A1

fig. 4

EP 0 565 147 A1

fig. 5

fig. 6

EP 0 565 147 A1

fig. 7

301
RX_A0

302
RX_A1

303
RX_A2

304
HALF WAVE
RECTIFIER

305
RX_A3

306
LOW PASS
FILTER

307
LEVEL
SHIFTER

308
RX_A4

R/TX2

R/TX1

VG

Σ

SW3

SW4

SW2

Vref

VOUT

SW1

300

EP 0 565 147 A1

| g i |
| --- |
| 1.359 |
| 1.848 |
| 2.512 |
| 3.415 |
| 4.642 |
| 6.31 |
| 8.577 |
| 11.659 |
| 15.849 |
| 21.544 |
| 29.286 |
| 39.811 |
| 54.117 |
| 73.564 |
| 100 |

fig. 8

fig. 9

EP 0 565 147 A1

ALARM ⊐──────────────── ALARM

PROG ⊐──────────────── PROG

MAIN +12 ⊐─ R48 180 ──── +12V ── LM 2931 ── +5V

C24 100N  C25 47U  OZ1 15V  C28 10U  C29 100N

VDD

C26 10U  C27 100N

GROUND ⊐──

400

fig. 10

RX\TX → AMP → AGC → A\D

...X(i-1,j-1) X(i,j-1) X(i+1,j-1)...

DELAY 64 SAMPLES

...X(i-1,j) X(i,j) X(i+1,j)...  MEMORY

X(i,j-1)

X(i,j)

$V(i,j)$

$P(i,j) = V(i,j) * V(i,j)$

Echoes power difference

P(0,j) P(1,j)...P(15,j)  |  P(15,j) P(16,j)...P(63,j)

$$D(j) = \frac{\sum_{i=16}^{i=63} P(i,j)}{3} - \frac{\sum_{i=0}^{i=15} P(i,j)}{}$$

MEMORY (16 words)

D(j)  D(j-1)  D(j-2)  D(j-15)

NUMERIC FILTER

$d(j)$

$$Df(j) = \frac{\sum_{k=0}^{15} d(j-k)}{16}$$

$Df(j)$

Treshold level evaluation

Dm(j)  S(j)

Dm(j)

S(j)

$Df(j) > S(j)$

Alarm

fig. 11

fig. 12

**European Patent Office**

## EUROPEAN SEARCH REPORT

Application Number

EP 93 20 0552

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 419 399 (ARI ARIAV)<br>* column 4, line 10 - line 31 *<br>* column 8, line 1 - line 35 * | 1-3,5,7 | B60R25/10 |
| Y | * column 13, line 21 - column 15, line 16; figure 1 * | 4 | |
| X | DE-A-3 805 439 (DOTRONIC MIKROPROZESSORTECHNIK)<br>* the whole document * | 1,2,4,5,7 | |
| Y | WO-A-8 805 950 (FOKON F. OLSSON KONSULTBYRA)<br>* page 5, line 18 - page 6, line 9 * | 4 | |
| A | GB-A-2 226 885 (UNITED KINGDOM ATOMIC ENERGY AUTHORITY)<br>* page 3, line 8 - line 12 * | 8,10 | |
| A | DE-C-3 529 402 (F + G MEGAMOS SICHERHEITSELEKTRONIK)<br>* column 1, line 1 - column 60 *<br>* column 4, line 4 - line 56 * | 8,10 | TECHNICAL FIELDS SEARCHED (Int. Cl.5)<br><br>B60R |

The present search report has been drawn up for all claims

| Place of search | Date of completion of the search | Examiner |
|---|---|---|
| THE HAGUE | 15 JULY 1993 | WALDORFF U. |

EPO FORM 1503 03.82 (P0401)